# EUROPEAN PATENT SPECIFICATION

(11) **EP 0 499 745 B1**
(45) Date of publication and mention of the grant of the patent: **08.07.1998**
(21) Application number: 91311383.3
(22) Date of filing: 06.12.1991
(51) Int. Cl.: F16J 15/56, F15B 15/14, F16J 15/00

(54) **Seal**
Abdichtung
Joint d'étanchéité

(30) Priority: 20.02.1991 US 658263
(43) Date of publication of application: 26.08.1992
(73) Proprietor: GENERAL ELECTRIC COMPANY, Schenectady, NY 12345 (US)
(72) Inventor: Elliot, Robert Allen, Atkinson, New Hampshire 03811 (US)
(74) Representative: Goode, Ian Roy

(56) References cited:
- CH-A- 667 141
- FR-A- 2 068 325
- US-A- 4 476 772

## Description

### Technical Field

The present invention relates generally to fluidically driven mechanical actuators and more specifically to a scraper and seal apparatus for preventing leakage of the high pressure fluid from said actuators caused by contamination of the high pressure seal.

### Background Information

The transmission of power is fundamental to the operation of a broad range of machines and is accomplished by various means, selection being driven for instance by cost or complexity. For example, in some aircraft gas turbine engines, mechanical actuation is required of variable geometry compressor stator systems or variable exhaust nozzle (VEN) systems for those equipped with augmentors. Due to the desirability of minimizing weight and size and maximizing reliability, a typical power transmission arrangement entails regulating the flow of a pressurized working fluid, such as fuel or oil, to a mechanical actuator causing the extension or retraction of a translating shaft. The shaft in turn is connected to a synchronization ring which mechanically drives the variable system to the desired geometry, through a plurality of cams, rollers, and linkages. Such structure is shown, for example, in U.S. Patent 4,245,787 issued to Freid and assigned to the same assignee as the present invention.

It is well known in the art that the control of variable geometry systems in gas turbine engines is fundamental to the proper performance of the engine. Malfunctioning systems can result in among other things degradation of thrust or compressor stalls.

One component of the VEN system which must operate reliably in this particularly hostile environment is the fluidic actuator. Leakage of the working fluid past the seal apparatus which circumscribes the translating shaft, at a minimum, requires maintenance action to maintain a sufficient supply of fluid in the system to keep it operational. Excessive leakage can render a properly filled system inoperable after a short period of time and requires replacement of the actuator. A representative seal apparatus is shown in U.S. Patent 3,630,531 issued to Bondi and assigned to the same assignee as the present invention. The seal is comprised of a resilient member with a recumbent "U" shaped cross section. The radially outer lip of the "U" is biased radially outwardly to form a static seal with the actuator housing bore and the radially inner lip is biased radially inwardly to form a dynamic seal with the translating shaft. The effectiveness of the seal depends among other things on the dimensional size and tolerance of the shaft and housing bore.

A typical VEN, such as that described in the aforementioned Freid patent, is comprised of a plurality of interleaved flap and seal members which cooperate to form a sealed nozzle for all actuator positions. During engine operation, the flaps and seals rub against each other both when the geometry of the nozzle is being changed, as well as when the geometry is fixed, due to aerodynamic buffeting. Due to the relatively high ambient temperature in the VEN cavity, the translatable shaft becomes coated with a sticky, viscous working fluid residue. As the cooperating flaps and seals wear, the resultant fine (abrasive metallic particles) is deposited on the sticky, extended surface of the actuator's shaft. When the shaft is retracted, the particles are drawn into the seal apparatus where it becomes trapped between the shaft and the resilient member. As the actuator cycles, the contamination becomes more severe and the shaft becomes scored along its working length affecting the ability of the resilient member to deform in sealing relationship with the shaft. At intermediate actuator positions, which correspond for example to flight idle or intermediate rated power, where the engine is operated for significant periods of time, localized scoring of the shaft is accelerated. This is because of dithering of the actuator by the control system which is attempting to maintain a fixed VEN geometry against the aerodynamic buffeting forces. What results is a progressive necking of the shaft and therefore increasing leakage at those actuator shaft locations as the clearance between the shaft and resilient member increases beyond the ability of the resilient member to deform in sealing relationship with the shaft.

As is well known in the art such as from US-A-4,476,772, a scraper is often incorporated to remove debris from actuator shafts which operate in dirty environments. It is either formed as part of the resilient member itself or as a separate element disposed between the resilient member and the source of contamination. If a separate element is used, the scraper tends to be of greater hardness than the resilient member and in some cases is metallic; however, the scraper itself must not score the shaft. Contaminants scraped off the shaft eventually collect on the face of the scraper and are forced radially outwardly. As the amount of contamination increases, the particulates are forced around the outer diameter of the scraper and once again build up against the resilient member. While delaying the onset of leakage by reducing the rate of passage of contaminants, the scraper additionally is subject to wear. Eventually, contamination of the resilient member and scoring of the shaft cause the seal apparatus to fail.

FR-A-2 068 325 discloses a fluidic apparatus as in the preamble of claim 4.

### Object of the Invention

Accordingly, the present invention seeks to provide a fluidic actuator which exhibits extended life in contaminated operating environments by providing a dynamic scraper element proximate the translating shaft and a static sealing element proximate the high pressure seal retainer thereby precluding the passage of contaminants into the high pressure seal area.

### Summary of the Invention

According to a first aspect of the invention, there is provided a fluidic apparatus comprising a cylindrical housing having a higher pressure zone in the housing and a lower pressure zone exterior of the housing, a cylindrical member slidable within said housing, means for preventing the passage of contaminants from the lower pressure zone, CHARACTERIZED BY: a primary scraper comprising first and second substantially symmetrical annular sharp edge lips extending symmetrically from an annular backing ring which resiliently biases said first sharp edged lip radially inwardly and said second sharp edged lip radially outwardly such that a cross-section of said primary scraper substantially forms a recumbent "U"; a secondary scraper substantially similar to said primary scraper aligned serially and unopposed with and spaced from said primary scraper for providing a contaminant retention zone therebetween wherein each of said primary and secondary scrapers independently statically seal and dynamically scrape contaminants from the surface of the cylindrical member; said first scraper means and said second scraper means being disposed in axial alignment around the longitudinal axis of said cylindrical member and having the open end of the "U" cross-sections facing the lower pressure zone.

According to a second aspect of the invention, there is provided a fluidic apparatus comprising a cylindrical housing having first and second zones alternately at a higher pressure and a lower pressure; a cylindrical member slidable within said housing, and a pair of means mounted on said cylindrical member for preventing the passage of contaminants from one zone when it is at the lower pressure, CHARACTERIZED IN THAT: each means for preventing the passage of contaminants comprises a primary scraper comprising first and second substantially symmetrical annular sharp edge lips extending symmetrically from an annular backing ring which resiliently biases said first sharp edged lip radially inwardly and said second sharp edged lip radially outwardly such that a cross-section of said primary scraper substantially forms a recumbent "U", a secondary scraper substantially similar to said primary scraper aligned serially and unopposed with and spaced from said primary scraper for providing a contaminant retention zone therebetween wherein each of said primary and secondary scrapers independently statically seal and dynamically scrape contaminants from the inside surface of the cylindrical housing; said first scraper means and said second scraper means being disposed in axial alignment around the longitudinal axis of said cylindrical member with the opening of the "U" of the scrapers of each pair of means facing a different one of said zones.

### Brief Description of the Drawings

The invention will now be described in greater detail, by way of example, with reference to the drawings in which:

Figure 1 is a schematic, longitudinal sectional view of a fluidic actuator having a translatable shaft in accordance with one embodiment of the present invention.

Figure 2 is a schematic, enlarged, partial, longitudinal sectional view of the shaft seal apparatus of the actuator illustrated in Figure 1.

Figure 3 is a schematic, enlarged, partial, longitudinal sectional view of the piston seal apparatus of the actuator illustrated in Figure 1 in accordance with an alternate embodiment of the present invention.

### Mode(s) for Carrying Out the Invention

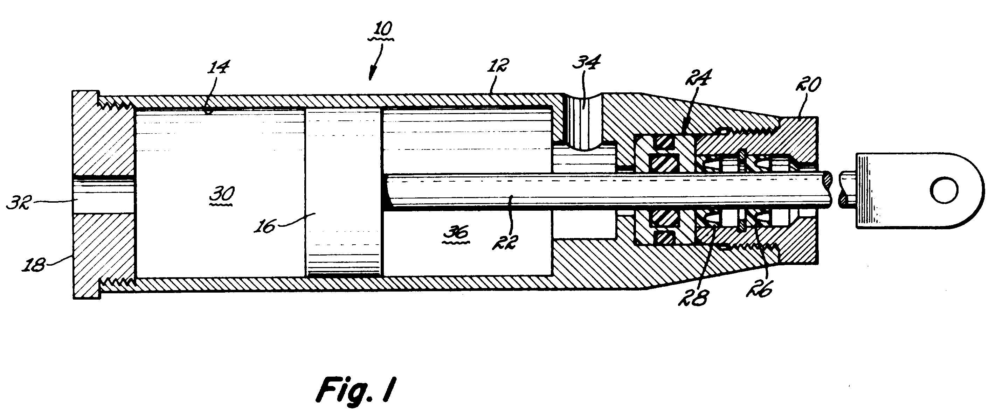

Figure 1 shows an actuator 10 which is comprised of a housing 12 having a cylindrical bore 14 and a piston 16 slidably disposed in said bore 14. The actuator 10 is further comprised of an end wall 18 and a seal retainer 20 each fastened at respective longitudinal ends of the housing 12. A translatable shaft 22 is connected to piston 16 and extends through retainer 20 and seal assembly 24, which prevents leakage of pressurized fluid from within actuator housing 12 around shaft 22. Disposed radially inwardly of the retainer 20 and circumscribing the shaft 22 are a primary scraper 26 and a secondary scraper 28. The shaft extension volume 30 bounded by bore 14, piston 16, and end wall 18 communicates with a pressurized fluid supply (not shown) via fluid port 32. A second fluid port 34 also in communication with a pressurized fluid supply (not shown) communicates with shaft retraction volume 36 bounded by bore 14, piston 16 and seal assembly 24. As can be readily understood, pressurization of extension volume 30 will cause the shaft 22 to extend from the actuator housing 12 or to the right as shown in Figure 1. In similar fashion, pressurization of retraction volume 36 will cause the shaft 22 to retract into the actuator housing 12 or to the left as shown in Figure 1. By balancing the forces in extension and retraction volumes 30 and 36 respectively, shaft 22, can be held in any fixed, longitudinal position within the stroke of the actuator 10.

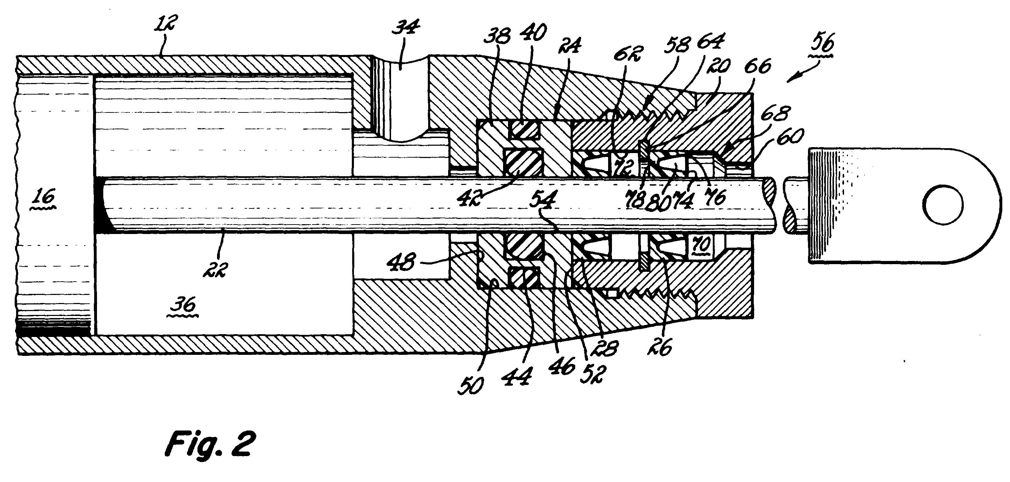

Figure 2 illustrates the subject of the invention in more detail. The seal assembly 24 is of a standard construction as known to those skilled in the art. Briefly, and in simplified form, the assembly 24 is comprised of an end gland 38, a static seal 40 and a dynamic seal 42. The static and dynamic seals 40 and 42 are respectively retained in outer and inner annular grooves 44 and 46 in the end gland 38. The gland 38 is received in the housing 12 and restrained from movement in the longitudinal and radial directions by annular wall 48, bore wall 50 and retainer end wall 52. A gland bore 54 slidably receives shaft 22. During proper operation, the seal assembly 24 prevents leakage of pressurized working fluid from retraction volume 36 to any area external to the actuator housing 12, generally shown at 56.

Further in Figure 2 is illustrated the retainer 20 threadedly attached to housing 12 at an area generally shown at 58, although a variety of alternate releasable attachment means are suitable. Retainer 20 has a first cylindrical bore 60 and a second concentric cylindrical bore 62 of a larger diameter than the first bore 60. Second bore 62 extends from retainer end wall 52 to the bore transition zone, shown generally at 68, and has a narrow annular slot 64 disposed approximately halfway along its length. That is to say that slot 64 is longitudinally equidistant from wall 52 and the transition zone 68 to the first bore 60. A split retaining ring 66 is removably located in slot 64, which has a larger diameter than that of bore 62. The free state outer diameter of ring 66 is greater than the diameter of bore 62 such that ring 66 must be radially compressed prior to insertion into slot 64. Elastic springback of ring 66 ensures its retention in slot 64.

A first annular region 70 is bounded by bore transition zone 68, second bore 62, ring 66 and shaft 22, and in which is retained primary scraper 26. A second annular region 72 is bounded by ring 66, second bore 62, end gland 38 and shaft 22 and in which is retained secondary scraper 28. By way of example, the features and function of primary scraper 26 will be presented which are also representative of secondary scraper 28. Scraper 26 is essentially a "U" cup seal from a class of seals known as pusher seals and are well known to those skilled in the seal art. Their use here however as combined dynamic scrapers and static seals is quite unconventional and has proven very successful.

The primary scraper 26 is comprised of two sharp edged cylindrical inner and outer lips shown at 74 and 76, respectively, connected by an annular backing ring 78, the cross section of the scraper resembling a recumbent "U". The scraper 26 is of unitary construction, typically being a molded polymer such as polytetrafluoroethylene. In its free state, the inner and outer lips 74 and 76 are slightly splayed radially inwardly and outwardly respectively so that upon installation in a properly sized annular zone, there is a predetermined pressure loading on the contact surfaces of said zone. Along the interior surface 80 of the inner and outer lips 74 and 76 and the backing ring 78 is disposed an elastically deformed metallic insert (not shown) which further biases the inner and outer lips 74 and 76 into scraping relationship with shaft 22 and sealing relationship with bore 62 respectively. When conventionally used as a seal, the opening of the "U" is always exposed to the pressurized fluid which is being sealed. The reaction of the pressure force on the inner and outer lips 74 and 76 augments the spreading force provided by the metallic insert, improving the sealing relationship. By reversing the direction of the "U", it has been discovered that not only does the inner lip 74 adequately remove contaminants affixed to shaft 22 during retraction of shaft 22 into the housing 12, but also that outer lip 76 prevents passage of contaminants which fill the interior surface 80 of the scraper 26 and annular region 70 from bypassing the scraper at its outer diameter along bore 62 into annular region 72. This effectively eliminates the means of contaminant ingress which afflict the prior art. The secondary scraper 28 is disposed in annular region 72 and performs a similar function as scraper 26, especially as scraper 26 wears.

As with conventional sealing applications, the materials utilized, sizes and surface finishes of shafts and bores, and other common criteria in specifying seal design direct the details on element selection and use and are understood by those skilled in the art. In component bench testing, which replicated actual actuator leakage failures at a highly accelerated rate, application of the inventive concepts disclosed herein have demonstrated over a ten times life improvement over the prior art.

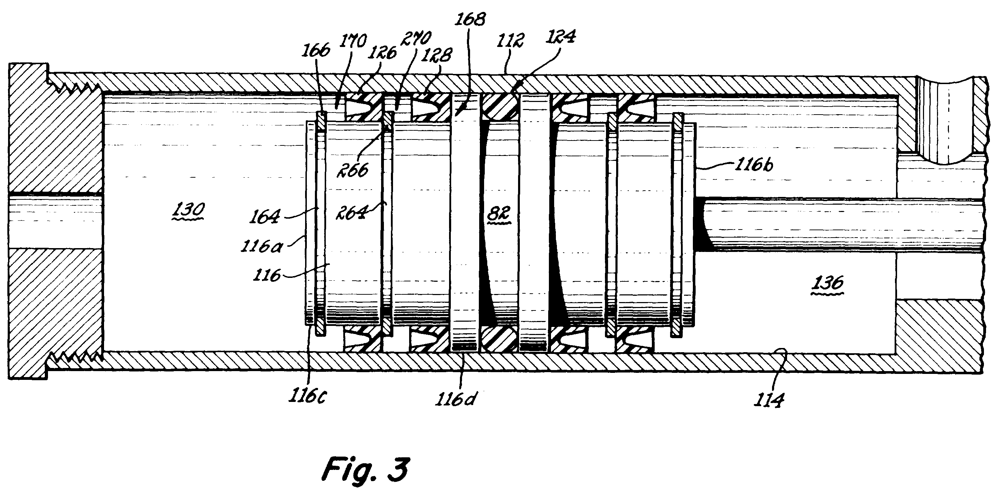

The usefulness and application of the teachings of this invention are broader than the shaft seal apparatus configuration shown in Figures 1 and 2. For example, Figure 3 illustrates an alternate embodiment of the invention as a bore seal apparatus for application in an environment where the pressurized working fluid itself is contaminated with abrasive particles. In Figure 3, a piston 116 of an alternate construction to that shown schematically in Figure 1 is shown schematically in more detail. Slidably disposed in cylindrical bore 114 of actuator housing 112 is piston 116 having a seal assembly 124 to prevent communication of pressurized working fluid between extension volume 130 and retraction volume 136. The seal assembly 124 is disposed in an annular seal slot 82 located approximately equidistant from the longitudinal end surfaces 116a and 116b of piston 116 which bound volumes 130 and 136, respectively. Seal assembly 124 is comprised of one or more elements well known to those skilled in the art, for example, "O" rings or "T" seals.

As the configuration of the piston 116 is symmetrical about a radial plane which passes through the longitudinal center of piston 116, for simplicity the following description will address solely the elements of the invention between piston end surface 116a and the radial plane of symmetry.

The outer diameter 116c of piston 116 proximate end wall 116a is less than the inner diameter of cylindrical bore 114. This spaced relationship is required for assembly of the following elements to piston 116. Progressing in the longitudinal direction at the outer diameter 116c of piston 116 starting at and spaced from end surface 116a is a first annular slot 164, wherein is disposed a first split retaining ring 166. Following is a first annular region shown generally at arrow 170, in which is disposed a primary scraper 126. Next is a second annular slot 264, wherein is disposed a second split retaining ring 266. Following is a second annular region shown generally at arrow 270, in which is disposed a secondary scraper 128. Scrapers 126 and 128 are similar in configuration and function to scrapers 26 and 28 described hereinbefore. As such, the opening of the recumbent "U" shaped cross section points away from seal assembly 124. Following secondary scraper 128 is a piston diameter transition zone, shown generally at arrow 168 at which location the maximum piston outer diameter 116d is initiated. The aforementioned seal slot 82 and seal assembly 124 are located in this maximum diameter 116d. The size of the elements shown in Figure 3 are schematic and presented for clarity of illustration. The actual relative sizes would be determined with conventional techniques for the specific application by those skilled in the art.

Alternatively, a simplified embodiment of the invention as disclosed in Figure 3, would eliminate seal slot 82 and seal assembly 124 from the piston 116, while maintaining longitudinal symmetry of the remaining elements. The use of two pairs of opposed scrapers as depicted without seal assembly 124 provides sufficient scraping and sealing for certain applications. In operation, when retraction volume 136 is pressurized, scrapers 126 and 128 scrape bore 114 as piston 116 translates to the left as shown in Figure 3, while their symmetrically opposed "U" cup seal counterparts function conventionally as seals. Similarly, when extension volume 130 is pressurized, scrapers 126 and 128 function as seals and their counterparts as scrapers. An additional embodiment of the invention is structurally similar to that in Figure 1; however, instead of being utilized in an actuator with a translatable shaft, it can be installed in actuators with either rotating or rotationally reciprocating shafts.

While there have been described herein what are considered to be preferred embodiments of the present invention, other modifications of the invention will be apparent to those skilled in the art from the teachings herein, and it is therefore desired to be secured in the appended claims all such modifications as fall within the true spirit and scope of the invention.

## Claims

1. A fluidic apparatus (10) comprising a cylindrical housing (12) having a higher pressure zone (36) in the housing (12) and a lower pressure zone exterior of the housing (12), a cylindrical member (22) slidable within said housing (12), means for preventing the passage of contaminants from the lower pressure zone, CHARACTERIZED BY:
a primary scraper (26) comprising first and second substantially symmetrical annular sharp edge lips (74,76) extending symmetrically from an annular backing ring (78) which resiliently biases said first sharp edged lip (74) radially inwardly and said second sharp edged lip (76) radially outwardly such that a cross-section of said primary scraper substantially forms a recumbent "U"; a secondary scraper (28) substantially similar to said primary scraper (26) aligned serially and unopposed with and spaced from said primary scraper (26) for providing a contaminant retention zone (72) therebetween wherein each of said primary and secondary scrapers independently statically seal and dynamically scrape contaminants from the surface of the cylindrical member; said first scraper means and said second scraper means being disposed in axial alignment around the longitudinal axis of said cylindrical member and having the open end of the "U" cross-sections facing the lower pressure zone.

2. The apparatus recited in claim 1 characterized by the cylindrical member being a rod (22) and the primary and secondary scrapers (26,28) are disposed around the rod so that the first radially inwardly biased lips (74) scrape the rod whereas the second radially outwardly biased lips (76) seal against the cylindrical housing.

3. The apparatus recited in claim 1 characterized by a seal assembly (24) separating the higher pressure zone and the lower pressure zone and positioned between said cylindrical member (22) and said housing (12).

4. A fluidic apparatus (10) comprising a cylindrical housing (112) having first and second zones (130,136) alternately at a higher pressure and a lower pressure; a cylindrical member (116) slidable within said housing (12), and a pair of means mounted on said cylindrical member (116) for preventing the passage of contaminants from one zone (130,136) when it is at the lower pressure, CHARACTERIZED IN THAT:
each means for preventing the passage of contaminants comprises a primary scraper (126) comprising first and second substantially symmetrical annular sharp edge lips extending symmetrically from an annular backing ring which resiliently biases said first sharp edged lip radially inwardly and said second sharp edged lip radially outwardly such that a cross-section of said primary scraper substantially forms a recumbent "U", a secondary scraper (128) substantially similar to said primary scraper (126) aligned serially and unopposed with and spaced from said primary scraper (126) for providing a contaminant retention zone (270) therebetween wherein each of said primary and secondary scrapers independently statically seal and dynamically scrape contaminants from the inside surface of the cylindrical housing; said first scraper means and said second scraper means being disposed in axial alignment around the longitudinal axis of said cylindrical member with the opening of the "U" of the scrapers (126,128) of each pair of means facing a different one of said zones (130,136).

5. The apparatus recited in claim 4 characterized by the cylindrical member being a piston (116) and the primary and secondary scrapers (126,128) are disposed around the piston so that the first radially inner sharp edge lips seal against the piston cylindrical surface whereas the second radially outer sharp edged lips scrape against the inner surface of the cylindrical housing.

6. The apparatus recited in claim 5 characterized by the higher pressure zone (130) and lower pressure zone (136) being reversible within the cylindrical housing and the piston (116) being bidirectional in movement and there being primary (126) and secondary (128) scrapers on both sides of a seal assembly (124) for the piston (116), each set of primary and secondary scrapers facing in a direction opposite the other set.

7. The apparatus recited in any one of claims 1 through 6 characterized by a stop means (66,266) interposed between the primary and secondary scrapers (26,28; 126,128) to prevent contact between the primary and secondary scrapers (26,28;126,128) during translation of the cylindrical member.

## Patentansprüche

1. Fluidische Einrichtung (10) mit einem zylindrischen Gehäuse (12), das eine Zone (36) höheren Druckes in dem Gehäuse (12) und eine Zone niedrigeren Druckes außerhalb des Gehäuses (12) aufweist, einem zylindrischen Teil (22), das in dem Gehäuse (12) verschiebbar ist, einer Einrichtung zum Verhindern des Durchtrittes von Verunreinigungen aus der Zone niederen Drucks,
gekennzeichnet durch:
einen primären Abstreifer (26), der erste und zweite im wesentlichen symmetrische, ringförmige, scharfkantige Lippen (74,76) aufweist, die symmetrisch von einem ringförmigen Stützring (78) ausgehen, der die erste scharfkantige Lippe (74) radial nach innen und die zweite scharfkantige Lippe (76) radial nach außen elastisch vorspannt, so daß ein Querschnitt von dem primären Abstreifer im wesentlichen ein liegendes "U" bildet; einen sekundären Abstreifer (28), der dem primären Abstreifer (26) im wesentlichen ähnlich ist, in einer Reihe fluchtend damit ausgerichtet und nicht entgegengesetzt gerichtet zu und im Abstand von dem primären Abstreifer (26) angeordnet ist, um eine Verunreinigungs-Rückhaltezone (72) dazwischen zu bilden, wobei die primären und sekundären Abstreifer jeweils unabhängig statisch abdichten und dynamisch Verunreinigungen von der Oberfläche des zylindrischen Teils abstreifen; wobei die erste Abstreifereinrichtung und die zweite Abstreifereinrichtung in axialer Ausrichtung um die Längsachse von dem zylindrischen Teil herum angeordnet sind und das offene Ende von den "U" Querschnitten auf die Zone niedrigeren Druckes gerichtet ist.

2. Einrichtung nach Anspruch 1, dadurch gekennzeichnet, daß das zylindrische Teil eine Stange (22) ist und die primären und sekundären Abstreifer (26,28) so um die Stange herum angeordnet sind, daß die ersten, radial nach innen vorgespannten Lippen (74) die Stange abstreifen, wogegen die zweiten, radial nach außen vorgespannten Lippen (76) gegen das zylindrische Gehäuse dichten.

3. Einrichtung nach Anspruch 1, gekennzeichnet durch eine Dichtungsanordnung (24), die die Zone höheren Druckes und die Zone niedrigeren Druckes trennt und zwischen dem zylindrischen Teil (22) und dem Gehäuse (12) angeordnet ist.

4. Fluidische Einrichtung (10) mit einem zylindrischen Gehäuse (112), das erste und zweite Zonen (130,136) aufweist, die abwechselnd auf einem höheren Druck und einem niedrigeren Druck sind, einem zylindrischen Teil (116), das in dem Gehäuse (12) verschiebbar ist, und mit zwei Einrichtungen, die auf dem zylindrischen Teil (116) angebracht sind, um den Durchtritt von Verunreinigungen aus der einen Zone (130,136) zu verhindern, wenn sie auf dem niedrigeren Druck ist,
dadurch gekennzeichnet, daß:
jede Einrichtung zum Verhindern des Durchtrittes von Verunreinigungen einen primären Abstreifer (126), der erste und zweite im wesentlichen symmetrische, ringförmige, scharfkantige Lippen aufweist, die symmetrisch von einem ringförmigen Stützring ausgehen, der die erste scharfkantige Lippe radial nach innen und die zweite scharfkantige Lippe radial nach außen elastisch vorspannt, so daß ein Querschnitt von dem primären Abstreifer im wesentlichen ein liegendes "U" bildet; einen sekundären Abstreifer (128) aufweist, der im wesentlichen ähnlich wie der primäre Abstreifer (126) ist und in einer Reihe fluchtend damit ausgerichtet ist und nicht entgegengesetzt zu und im Abstand von dem primären Abstreifer (126) angeordnet ist, um dazwischen eine Verunreinigungs-Rückhaltezone (270) zu bilden, wobei die primären und sekundären Abstreifer jeweils unabhängig statisch dichten und dynamisch Verunreinigungen von der innenseitigen Oberfläche des zylindrischen Gehäuses abstreifen; wobei die erste Abstreifereinrichtung und die zweite Abstreifereinrichtung in axialer Ausrichtung um die Längsachse des zylindrischen Teils herum angeordnet sind, wobei die öffnung von dem "U" der Abstreifer (126,128) von jedem Paar von Einrichtungen auf eine unterschiedliche Zone (130,136) gerichtet ist.

5. Einrichtung nach Anspruch 4, dadurch gekennzeichnet, daß das zylindrische Teil ein Kolben (116) ist und die primären und sekundären Abstreifer (126,128) so um den Kolben herum angeordnet sind, daß die ersten, radial inneren, scharfkantigen Lippen gegen die zylindrische Kolbenfläche dichten, wogegen die zweiten, radial äußeren, scharfkantigen Lippen gegen die innere Oberfläche von dem zylindrischen Gehäuse abstreifen.

6. Einrichtung nach Anspruch 5, dadurch gekennzeichnet, daß die Zone (130) höheren Druckes und die Zone (136) niedrigeren Druckes in dem zylindrischen Gehäuse reversibel sind und der Kolben (116) in seiner Bewegung bidirektional ist und primäre (126) und sekundäre (128) Abstreifer auf beiden Seiten von einer Dichtungsanordnung (124) für den Kolben (116) vorgesehen sind, wobei jeder Satz von primären und sekundären Abstreifern in einer Richtung entgegengesetzt zu dem anderen Satz gerichtet ist.

7. Einrichtung nach einem der Ansprüche 1 bis 6, gekennzeichnet durch eine Anschlagvorrichtung (66,266), die zwischen den primären und sekundären Abstreifern (26,28; 126,128) angeordnet ist, um einen Kontakt zwischen den primären und sekundären Abstreifern (26,28;126,128) während einer Verschiebung des zylindrischen Teils zu verhindern.

## Revendications

1. Appareil hydraulique (10) comprenant un boîtier cylindrique (12) avec une région de haute pression (36) dans le boîtier (12) et une région de basse pression à l'extérieur du boîtier (12), un élément cylindrique (22) pouvant coulisser dans ledit boîtier (12), un moyen pour empêcher le passage de contaminants en provenance de la région de basse pression,
caractérisé par un râcleur principal (26) comprenant des première et deuxième lèvres (74, 76), à bord aigu, annulaires et sensiblement symétriques, qui s'étendent symétriquement depuis une bague de support (78) annulaire qui pousse de manière élastique ladite première lèvre à bord aigu (74) radialement vers l'intérieur et ladite deuxième lèvre à bord aigu (76) radialement vers l'extérieur de sorte qu'en coupe ledit râcleur principal forme sensiblement un "U" couché ; un râcleur secondaire (28) sensiblement similaire audit râcleur principal (26), aligné en série et de manière non opposée avec ledit râcleur principal (26), à une certaine distance de lui pour former entre eux une zone (72) de retenue des contaminants, dans lequel chacun desdits râcleurs principal et secondaire assure une étanchéité statique et indépendante et râcle de manière dynamique les contaminants de la surface de l'élément cylindrique ; ledit premier moyen de râclage et ledit deuxième moyen de râclage étant disposés en alignement axial autour de l'axe longitudinal dudit élément cylindrique et ayant l'extrémité ouverte de leur section en "U" qui fait face à la région de basse pression.

2. Appareil selon la revendication 1, caractérisé par le fait que l'élément cylindrique est une tige (22) et les râcleurs principal et secondaire (26, 28) sont disposés autour de la tige de manière que les premières lèvres (74) poussées radialement vers l'intérieur raclent la tige alors que les deuxièmes lèvres (76) poussées radialement vers l'extérieur appuient de manière étanche sur le boîtier cylindrique.

3. Appareil selon la revendication 1, caractérisé par un ensemble d'étanchéité (24) séparant la région de haute pression et la région de basse pression, placé entre ledit élément cylindrique (22) et ledit boîtier (12).

4. Appareil hydraulique (10) comprenant un boîtier cylindrique (112) avec des première et deuxième régions (130, 136) alternativement à une haute pression et à une basse pression, un élément cylindrique (116) pouvant coulisser dans ledit boîtier (112) et une paire de moyens montés sur ledit élément cylindrique (116) pour empêcher le passage de contaminants en provenance d'une première région (130, 136) quand elle est à la pression la plus basse,
caractérisé en ce que chaque moyen servant à empêcher le passage des contaminants comprend un râcleur principal (126) comprenant des première et deuxième lèvres à bord aigu, annulaires et sensiblement symétriques, qui s'étendent symétriquement depuis une bague de support annulaire qui pousse de manière élastique ladite première lèvre à bord aigu radialement vers l'intérieur et ladite deuxième lèvre à bord aigu radialement vers l'extérieur de sorte que la section dudit racleur principal forme sensiblement un "U" couché, un râcleur secondaire (128) sensiblement similaire audit râcleur principal (126), aligné en série et de manière non opposée avec ledit râcleur principal (126), à une certaine distance de lui pour former entre eux une zone (270) de retenue des contaminants, dans lequel chacun desdits râcleurs principal et secondaire assure une étanchéité statique et indépendante et râcle de manière dynamique les contaminants de la surface intérieure de l'élément cylindrique; ledit premier moyen de râclage et ledit deuxième moyen de râclage étant disposés en alignement axial autour de l'axe longitudinal dudit élément cylindrique avec l'ouverture du "U" des racleurs (126, 128) de chaque paire de moyens tournée vers l'une différente desdites régions (130, 136).

5. Appareil selon la revendication 4, caractérisé par le fait que l'élément cylindrique est un piston (116) et les râcleurs principal et secondaire (126, 128) sont disposés autour du piston de telle sorte que les premières lèvres à bord aigu et radialement intérieures portent de manière étanche contre la surface cylindrique du piston alors que les deuxièmes lèvres à bord aigu et radialement extérieures grattent la surface intérieure du boîtier cylindrique.

6. Appareil selon la revendication 5, caractérisé par le fait que la région de haute pression (130) et la région de basse pression (136) sont réversibles dans le boîtier cylindrique et par le fait que le piston (116) peut se déplacer dans les deux sens, des râcleurs principaux (126) et secondaires (128) étant présents des deux côtés d'un ensemble d'étanchéité (124) destiné au piston (116), chaque groupe de râcleurs principal et secondaire étant tourné dans une direction opposée par rapport à l'autre groupe.

7. Appareil selon l'une quelconque des revendications 1 à 6, caractérisé par un moyen d'arrêt (66, 266) interposé entre les râcleurs principal et secondaire (26, 28; 126, 128) pour empêcher le contact entre les râcleurs principal et secondaire (26, 28; 126, 128) pendant la translation de l'élément cylindrique.
